Europäisches Patentamt

European Patent Office

Office européen des brevets

(19)

(11) Veröffentlichungsnummer: **0 163 849**
**B1**

(12) **EUROPÄISCHE PATENTSCHRIFT**

(45) Veröffentlichungstag der Patentschrift: **01.08.90**

(21) Anmeldenummer: **85104189.7**

(22) Anmeldetag: **05.04.85**

(51) Int. Cl.⁵: **H 01 R 43/28,** H 01 R 43/00, H 01 R 43/04

(54) **Transportvorrichtung für einen Kabelkonfektionierungsautomaten.**

(30) Priorität: **04.05.84 DE 3416432**

(43) Veröffentlichungstag der Anmeldung:
**11.12.85 Patentblatt 85/50**

(45) Bekanntmachung des Hinweises auf die Patenterteilung:
**01.08.90 Patentblatt 90/31**

(84) Benannte Vertragsstaaten:
**AT BE CH DE FR GB IT LI NL SE**

(56) Entgegenhaltungen:
**DE-A-3 212 542**
**DE-A-3 243 906**

(73) Patentinhaber: **Jürgenhake, Bernhard, Dr.-Ing.**
**Im Brok 45**
**D-4782 Erwitte-Völlinghausen (DE)**

(72) Erfinder: **Jürgenhake, Bernhard, Dr.-Ing.**
**Im Brok 45**
**D-4782 Erwitte-Völlinghausen (DE)**

## Beschreibung

Die Erfindung bezieht sich auf eine Transportvorrichtung für einen Kabelkonfektionierungsautomaten, gemäß Oberbegriff des Anspruches 1.

Insbesondere in der Massenherstellung, wie z.B. bei der Herstellung von Fahrzeugen und Haushaltsgeräten, werden immer mehr vorgefertigte, sogenannte konfektionierte Kabelsätze, an deren Enden Kupplungselemente, wie z.B. Steckkontakte, angeschlagen sind, verwendet. Beim Konfektionieren der Kabel werden diese abgelängt, beidseitig abisoliert und mit elektrischen Kupplungselementen, wie z.B. Steckkontakten, versehen. Dabei besteht oft der Wunsch, mehrere Kabel von unterschiedlichen Längen durch einen Steckkontakt elektrisch zu verbinden. Dieses Konfektionieren erfolgt maschinell durch sogenannte Konfektionierungsautomaten. Dabei wird das auf Rollen angelieferte Kabel zum Ablängen in Längsrichtung und zum Anschlagen der Kupplungselemente quer zur Längsrichtung den jeweiligen Bearbeitungsstationen zugeführt.

In der DE—A—32 43 906 ist ein solcher Kabelkonfektionierungsautomat dargestellt und beschrieben. Hierbei besteht der zweite der beiden in der Förderrichtung senkrecht zueinander stehenden Förderer aus zwei übereinander angeordneten Endlosriemen, von denen die beiden benachbarten Abschnitte das abgeschnittene Kabelende erfassen und das Kabel senkrecht zu seiner Längsachse weitertransportieren. Zum Einführen des Kabelendes zwischen die beiden Riemenabschnitte werden diese in ihrem vorderen Bereich durch Verstellen der Umlenkrollen voneinander abgehoben, das Kabel eingeschoben und anschließend die beiden Riemanabschnitte wieder zusammengeführt. Dieser Aufbau des zweiten Förderers ist nachteilig, da zum Einführen des Kabelendes große Massen bewegt werden müssen. Aufgrund dessen ist die Taktzeit relativ lang.

Aufgabe der Erfindung ist es, eine Transportvorrichtung zu schaffen, bei der er zweite, die Kabelabschnitte senkrecht zu ihrer Längsachse transportierende Förderer zum Erfassen des Kabels keine zusätzlichen Bewegungen ausführen muß.

Diese Aufgabe wird erfindungsgemäß dadurch gelöst, daß sich an den ersten Förderer ein das Kabel in seiner Längsachse führender, zumindest bis zum zweiten Förderer erstreckender Kanal anschließt, in den ein von der dem zweiten Förderer abgewandten Seite her ein Schieber eingreift, der das Kabel durch einen gegenüberliegenden, sich beim Vorschub des Schiebers öffnenden Schlitz in die Klemmaufnahme des zweiten Förderers schiebt. Bei einer derart ausgestalteten Zuführvorrichtung braucht lediglich der eine relativ kleine Masse aufweisende Schieber bewegt zu werden, während die Förderer unbeeinflußt bleiben.

Bei einer vorteilhaften Ausführungsform der Erfindung ist der den Führungskanal auf seiner gesamten Länge zur Seite des zweiten Förderers öffnende Schlitz durch lippenartig aneinanderstoßende Federbleche geschlossen, deren Stoßkanten sich beim Herausschieben des Kabels aus dem Führungskanal federnd voneinander abheben. Der Vorteil dieser Federbleche ist, daß das Öffnen und Schließen des Führungskanals ohne besondere Ansteuerungselemente erfolgt.

Weiterhin ist von Vorteil, daß der Führungskanal von einer durchgehenden Nut einer Leiste gebildet ist, in die von der dem zweiten Förderer abgewandten Seite ein Schieber eingreift und die an der dem zweiten Förderer zugewandten Seite von zwei Federblechen abgedeckt ist, die in der Höhe der Nut lippenartig aneinanderstoßen. Die Verwendung einer Leiste bringt den Vorteil, daß die Federbleche gut angebracht werden können und der Schieber gleichzeitig eine Führung erhält.

Bei einer weiteren Ausgestaltung der Erfindung wird der zweite Förderer von zwei Endlosriemen gebildet, deren benachbarte Abschnitte das Kabel zwischen sich einklemmen und die beiden Riemen zumindest auf den sich zugewandten Seiten weichelastisch ausgeführt sind. Die weichelastische Ausführung der Riemen ermöglicht ein weites Einschieben der Kabel zwischen die beiden Riemen, so daß ein rutschfreies Erfassen und Transportieren des Kabels gewährleistet ist.

Bei dem in der DE—A—32 43 906 beschriebenen Konfektionierungsautomaten besteht der zweite Förderer nur aus einem einzigen Riemenpaar. Soll ein längerer Kabelabschnitt an beiden Enden mit Kontaktanschlüssen versehen werden, so muß der Kabelabschnitt nach dem Anschlagen eines ersten Kontaktanschlusses in Kabellängsrichtung transportiert werden. Dazu ist es wiederum erforderlich, daß die beiden den Kabelabschnitt erfassenden Riemenabschnitte voneinander abgehoben werden und der Kabelabschnitt mit einer weiteren Fördereinrichtung in Richtung seiner Längsachse transportiert wird. Dieses ist ein Arbeitsvorgang, der sehr zeitaufwendig ist und somit die Taktzeit verlängert. Um diesen Nachteil zu beseitigen, wird weiterhin vorgeschlagen, daß parallel zum zweiten Förderer ein im Aufbau entsprechender dritter Förderer angeordnet ist. Diese beiden Endlosbänder sind als Riemenantriebe ausgebildet und liegen in einem solchen Abstand auseinander, daß der abgelängte Kabelabschnitt jeweils an seinen Enden zum Weitertransport erfaßt wird. Seitlich beider Riemenantriebe sind Bearbeitungsstationen, z.B. zum Anschlagen der Kabelanschlüsse, angeordnet. Nach einem weiteren Vorteil der Erfindung ist mindestens ein Riemenantrieb des dritten Förderers in und entgegengesetzt der Förderrichtung des ersten Förderers in seiner lage verstellbar. Damit können Kabelabschnitte frei wählbarer Länge an den beiden Enden zum Weitertransport erfaßt werden.

Nach einer weiteren vorteilhaften Ausgestaltung der Erfindung ist der Schieber zwischen den zweiten und dritten Riemenantrieben des zweiten Förderers geteilt und jeder Teil weist einen separat ansteuerbaren Antrieb auf. Dadurch ist es möglich, ein Ende mehrerer Kabelabschnitte mit einem gemeinsamen Anschlußkontakt zu versehen, wobei die einzelnen Kabelabschnitte noch eine unterschliedliche Länge aufweisen können. Die längeren Kabelabschnitte hängen dabei zwischen den beiden Endlosbändern des zweiten Förderers nach unten durch.

Die Zeichnung veranschaulicht ein Ausführungsbeispiel der Erfindung, und zwar zeigen

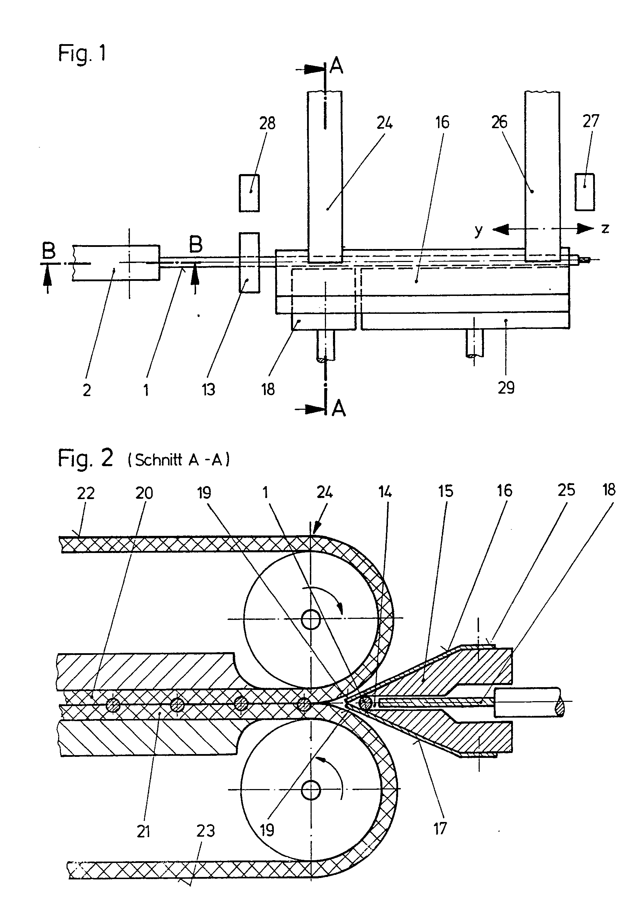

Figur 1 eine Draufsicht auf die Transportvorrichtung,

Figur 2 einen Längsschnitt nach die Linie A—A durch den ersten Riemenantrieb des zweiten Förderers, und

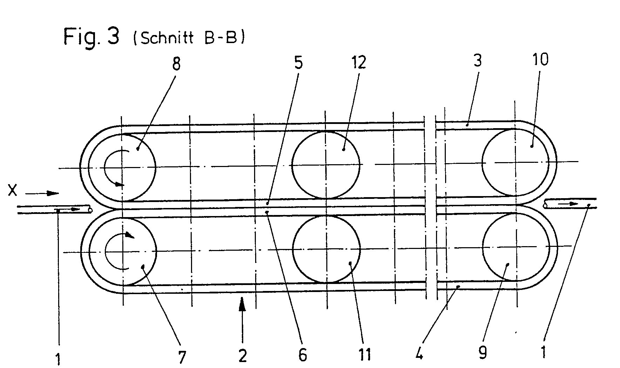

Figure 3 einen Längsschnitt nach der Linie B—B durch den ersten Förderer.

Das Kabel 1 wird von einer nicht dargestellten Trommel abgewickelt und von dem ersten Förderer 2 in Richtung X transportiert. Dieser erste Förderer besteht aus einem Riemanpaar 3, 4, dessen Abschnitte 5, 6 das Kabel 1 zwischen sich einklemmen. Angetrieben wird der Riemenantrieb durch die Rollen 7, 8. Die Rollen 9, 10 bilden die Umlenkrollen, während die Rollen 11, 12 lediglich den Anpreßdruck der Riemenabschnitte 5, 6 an das weiter zu transportierende Kabel erhöhen. Von dem Förderer 2 wird das Kabel 1 in den Kanal 14 geschoben, der von einer Längsnut in der Leiste 15 und von den Federblechen 16 und 17 gebildet wird. Von der dem zweiten Förderer abgewandten Seite her greift ein aus einem dickeren Blechstreifen gebildeter Schieber 18 in die Längsnut der Leiste 15 ein. Dieser Schieber 18 schiebt das Kabel 1 unter einem vorübergehenden federnden Abheben der Randbereiche 19 der Federbleche 16, 17 zwischen die aneinanderliegenden Abschnitte 20, 21 der den zweiten Förderer 24 bildenden Riemen 22 und 23. Die Riemen 22 und 23 sind aus elastischem Material oder zumindest weisen sie eine weichelastische Oberfläche auf, so daß die Kabel 1 soweit zwischen die aufeinanderliegenden Riemenabschnitte 20, 21 geschoben werden können, daß die Kabelabschnitte 1 sicher von dem Förderer 24 erfaßt werden. Bevor das Kabel 1 durch den Schieber 18 in den zweiten Förderer 24 gepreßt wird, wird es durch die Ablängvorrichtung 13 auf die richtige Länge geschnitten.

Die Leiste 15 des Kabelzuführsystems ist zum zweiten Förderer 24 hin dachförmig abgeschrägt. Auf jeder der Schrägflächen liegt ein Federblech 16, 17 auf, welches an dem dem zweiten Förderer abgewanten Ende 25 befestigt ist. An dem Ende 19 liegen die beiden Federblech 16, 17 lippenartig aneinander. Diese freien, unter Vorspannung aneinanderliegenden Enden 19 der Federbleche 16, 17 öffnen sich unter dem Druck des Schiebers 18 und lassen das Kabel 1 aus dem Kanal 14 heraustreten. Die spitzwinklige Anordnung der beiden Federbleche 16, 17 ermöglicht ein möglichst weites Hereinführen der Kabelenden zwischen die beiden Riemenabschnitte 20 und 21.

Der zweite Förderer besteht aus den Riemenantrieben 24 und 26, die in Förderrichtung des Förderers 2 hintereinander angeordnet sind. Der Riemenantrieb 26 ist genauso ausgebildet wie der Riemenantrieb 24. Der Riemenantrieb 26 ist jedoch in den Richtungen Y und Z gemeinsam mit der Bearbeitungsstation 27 zum Anschlagen von Kontaktstücken verstellbar. Durch die Anordnung eines zweiten Riemenantriebs 26 können die von der Ablängstation 13 auf die richtige Länge geschittenen Kabelabschnitte 1 an beiden Enden durch die anschlagstationen 27 und 28 bearbeitet werden.

Das Zuführsystem für den aus den beiden Riemenantrieben 24 und 26 bestehenden zweiten Förderer besteht aus zwei geteilten Schiebern 18 und 29, deren Antrieb separat ansteuerbar ist. Dadurch ist es möglich, die beiden Enden auch von sehr langen Kabelabschnitten 1 gleichzeitig bearbeiten zu können. Dabei wird das Kabel 1 durch den Förderer 2 soweit vegeschoben, daß es mit seinem freien Ende in der Höhe der Bearbeitungsstation 27 liegt. Durch den Schieber 29 wird das Kabelende zwischen die beiden benachbarten Abschnitte des Riemenantriebs 26 geschoben und zur Bearbeitungsstation 27 weitergefördert. Dann wird der Förderer 2 nochmals betätigt. Dabei entsteht ein Durchhang des Kabels zwischen den beiden Riemenantrieben 24 und 26. Dann wird der Kabelstrang 1 von der Ablängstation 13 getrennt und das zweite Ende des abgeschnittenen Kabels von dem Schieber 18 zwischen die Riemenabschnitte 20, 21 des Riemenantriebs 24 gepreßt. Von dem Riemenantrieb 24 wird dieses Kabelende bis zur Bearbeitungsstation 28 weitergefördert.

Durch den geteilten Schieber ist es möglich, mehrere Kabelabschnitte an einem Ende mit ein- und demselben Anschlußkontakt zu versehen. Dazu wird das Kabel 1 von dem Förderer 2 mit seinem freien Ende bis zur Bearbeitungsstation 27 vorgeschoben. Das Kabel 1 wird von der Station 13 abgelängt und von den Schiebern 18 und 29 zwischen die Riemenantrieb 24 und 26 geschoben. Der Riemenantrieb 24 wird betätigt und das abgeschnittene Kabelende zur Anschlagstation 28 gefördert. Im Anschluß daran wird von dem ersten Förderer 2 das Kabel 1 mit seinem freien Ende wieder bis zur Höhe der Bearbeitungsstation 27 geschoben und von dem Schieber 29 zwischen dem Riemenantrieb 26 geschoben. Hier liegen die Enden der beiden Kabelabschnitte beieinander und können gemeinsam mit einem Steckanschluß versehen werden. Sollen beide Kabelabschnitte gleich lang sein, so wird gleichzeitig auch der Schieber 18 betätigt. Soll der zweite Kabelabschnitt jedoch länger sein, so wird zunächst erst noch der Förderer 2 betätigt, so daß der zweite Kabelabschnitt einen Durchhang erhält. Der von der Station 13 abgelängte Kabelabschnitt wird nunmehr von dem Schieber 18 zwischen den Riemenantrieb 24 geschoben und von diesem zu der Bearbeitungsstation 28 transportiert.

**Patentansprüche**

1.    Transportvorrichtung    für    einen Kabelkonfektionierungsautomaten, bestehend aus einem ersten Förderer (2), der das von einer Rolle abgewickelte Kabel (1), in Richtung seiner Längsachse zu einer Ablängstation (13) transportiert, und aus einem zweiten, sich anschließenden Förderer (24), der das Kabel (1), senkrecht zur Kabelachse weitertransportiert, und der Klemmaufnahmen aufweist, in die das Kabel (1) hineingegeben wird dadurch gekennzeichnet, daß sich an den ersten Förderer (2) ein das Kabel (1) in seiner Längsachse führender, zumindest bis zum zweiten Förderer (24) erstrekkender Kanal (14) anschließt, in den ein von der dem zweiten Förderer (24) abgewandten Seite her ein Schieber (18) eingreift, der das Kable (1) durch einen gegenüberliegenden, sich beim Vorshub des Schiebers (18)öffnenden Schlitz in die Klemmaufnahme des zweiten Förderers (24) schiebt.

2. Transportvorrichtung nach Anspruch 1, dadurch gekennzeichnet, daß der den Führungskanal (14) auf seiner gesamten Länge zur Seite des zweiten Förderers (24) öffnende Schlitz durch lippenartig aneinanderstoßende Federbleche (16) geschlossen ist, deren Stoßkanten (19) sich beim Herausschieben des Kabels (1) aus dem Führungskanal (14) federnd voneinander abheben.

3. Transportvorrichtung nach Anspruch 1 oder 2, dadurch gekennzeichnet, daß der Führungskanal (14) von einer durchgehenden Nut einer Leiste (15) gebildet ist, in die von der dem zweiten Förderer (24) abgewandten Seite ein Schieber (18) eingreift und die an der dem zweiten Förderer (24) zugewandten Seite von zwei Federblechen (16) abgedeckt ist, die in der Höhe der Nut lippenartig aneinanderstoßen.

4. Transportvorrichtung nach Anspruch 1, dadurch gekennzeichnet, daß der zweite Förderer (24) von zwei parallel verlaufenden Endlosriemen (20, 21) gebildet wird, deren benachbarte Abschnitte das Kabel einklemmen und die beiden Riemen zumindest auf den sich zugewandten Seiten weichelastisch ausgeführt sind.

5. Transportvorrichtung nach Anspruch 4, dadurch gekennzeichnet, daß der Schieber (18) das Kabel (1) in Transportrichtung des zweiten Förderers (24) zwischen die benachbarten Endabschnitte der den zweiten Förderer bildenden Endlosriemen (20, 21) schiebt.

6. Transportvorrichtung für einen Kabelkonfektionierungsautomaten, bestehend aus einem ersten Förtderer (2), der das von einer Rolle abgewickelte Kabel (1) in Richtung seiner Längsachse zu einer Ablängstation (13), transportiert, und aus einem quer hierzu verlaufenden, aus einem Endlosband bestehenden zweiten Förderer (24), der das Kabel (1) Klemmend aufnimmt und senkrecht zur Kabelachse weitertransportiert und der Klemmaufnahmen aufweist, in die das Kabel hineingegeben wird, dadurch gekennzeichnet, daß parallel zum zweiten Förderer (24) ein im Aufbau entsprechender dritter Förderer (26) angeordnet ist.

7. Transportvorrichtung nach Anspruch 6, dadurch gekennzeichnet, daß die beiden Endlosbandförderer als Riemenantriebe (24, 26) ausgebildet sind.

8. Transportvorrichtung nach Anspruch 7, dadurch gekennzeichnet, daß mindestens ein Riemenantrieb (26) des dritten Förderers (26) in und entgegen der Förderrichtung des ersten Förderers (2) in seiner Lage verstellbar ist.

9. Transportvorrichtung nach Anspruch 8, dadurch gekennzeichnet, daß der vom ersten Förderer (2) gesehene zweite Riemenantrieb des zweiten Förderers (24) in seiner Lage verstellbar ist.

10. Transportvorrichtung nach Anspruch 1 und 9, dadurch gekennzeichnet, daß der Schieber (18, 29) zwischen den zweiten und dritten Riemenantrieben (24, 26) geteilt ist und jeder Teil einen separat ansteuerbaren Antrieb aufweist.

**Revendications**

1. Dispositif de transport pour un automate de terminaison de câbles, composé d'un premier transporteur (2) qui transporte le câble (1) déroulé d'un rouleau, parallèlement à son axe longitudinal, à un poste de coupe à longueur (13), et d'un deuxième transporteur (24) qui y fait suite, qui transporte le câble (1) plus loin, perpendiculairement à l'axe du câble, et présente des logements de serrage dans lesquels le câble (1) est introduit, caractértisé en ce que, au premier transporteur (2), fait suite un canal (14) qui conduit le câble (1) selon son axe longitudinal, qui s'étend au moins jusqu'au deuxième transporteur (24), et dans lequel est engagé, par le côté qui est à l'opposé du deuxième transporteur (24), un poussoir (18) qui enfonce le câble (1) dans le logement de serrage du deuxième transporteur (24) en le faisant passer à travers une fente opposée, laquelle s'ouvre lors de l'avance du poussoir. .

2. Dispositif de transport selon la revendication 1, caractérisé en ce que, la fente qui ouvre le canal de guidage sur toute sa longueur vers le côté du deuxième transporteur (24) est fermée par des lames de tôle élastiques (16) qui se rejoignent en forme de lèvres et dont les bords jointifs (19) s'écartent l'un de l'autre élastiquement lorsque le câble (1) est éjecté du canal de guidage (14).

3. Dispositif de transport selon une quelconque des revendications 1 et 2, caractérisé en ce que le canal de guidage (14) est formé par une rainure traversante pratiquée dans une barre profilée (15), et dans laquelle un poussoir (18) s'engage en provenant du côté qui est le plus éloigné du deuxième transporteur (24), cette rainure étant fermée sur le côté dirigé vers le deuxième transporteur (24), par deux lames de tôle élastiques (16) qui sont en appui l'une contre l'autre à la façon de lèvres, à la hauteur de la rainure.

4. Dispositif de transport selon la revendication 1, caractérisé en ce que le deuxième transporteur (24) est formé de deux courroies sans fin (20, 21) quis'étendent parallèlement, dont les brins adjacents serrent le câble, et en ce que les deux courroies sont d'une constitution souple sur leurs faces dirigées l'une vers l'autre.

5. Dispositif de transport selon la revendication 4, caractérisé en ce que le poussoir (18) pousse le câble (1) dans la direction du transport du deuxième transporteur (24), pour l'engager entre les brins adjacents des courroies sans fin (20, 21) qui forment le deuxième transporteur.

6. Dispositif de transport pour un automate de terminaison de câbles, composé d'un premier transporteur (2), qui transporte le câble (1) déroulé d'un rouleau, parallèlement à son axe longitudinal jusqu'à un poste de couple à longueur (13), et d'une deuxième transporteur (24) s'étendant transversalement à cette direction et composé d'une courroie sans fin, qui saisit le câble (1) en le serrant et le transporte plus loin perpendiculairement à l'axe du câble, ce transporteur présentant des logements à serrage dans lesquels le câble est transféré, caractérisé en ce qu'un troisième transporteur (26) de construction correspondant à celle du deuxième transporteur (24) est disposé parallèlement à celui-ci.

7. Dispositif de transport selon la revendication 6, caractérisé en ce que les deux transporteurs à courroies sans fin sont constitués par des transmissions à courroie (24, 26).

8. Dispositif de transport selon la revendication 7, caractérisé en ce qu'au moins une transmission à courroie (26) du troisième transporteur (26) est réglable en position dans le sens du transport du premier transporteur (2) et dans le sens inverse.

9. Dispositif de transport selon la revendication 8, caractérisé en ce que la transmission à courroie du deuxième transporteur (24), qui est la deuxième, vue du premier transporteur (2), est réglable en position.

10. Dispositif de transport selon les revendications 1 et 9, caractérisé en ce que le poussoir est divisé entre le deuxième et le troisième transporteurs et en ce que chaquie partie de ce poussoir comprend un entraînement commandé séparément.

**Claims**

1. A conveyor system for an automatic cable preparation machine, consisting of a first conveyor (2), which conveys the cable (1) unwound from a reel in the direction of its longitudinal axis to a cable cutting station (13), and of a second, following conveyor (24), which moves the cable (1) on, perpendicular to the cable axis, and which has clamping locators into which the cable (1) is fed, characterised in that following on from the first conveyor (2) there extends a channel (14) which guides the cable (1) in its longitudinal axis at least as far as the second conveyor (24), and into which channel a slide (18) engages from the side remote from the second conveyor (24), said slide pushing the cable (1) into the clamping locator of the second conveyor (24) through an opposing slot which opens as the slide (18) is advanced.

2. The conveyor system according to claim 1, characterised in that the slot which opens the guiding channel (14) along its entire length to the side of the second conveyor (24) is closed by sprung metal sheets (16) which meet in the manner of lips and the abutting edges (19) of which lift resiliently away from one another as the cable (1) is pushed out of the guide channel (14).

3. The conveyor system according to claim 1 or 2, characterised in that the guiding channel (14) is formed by a continuous groove of a strip (15), into which a slide (18) engages from the side remote from the second conveyor (24) and which on the side nearest the second conveyor (24) is masked by two sprung metal sheets (16), which meet at groove level in the manner of lips.

4. The conveyor system according to claim 1, characterised in that the second conveyor (24) is formed by two parallel continuous belts (20, 21), the neighbouring sections of which squeeze the cable, and the two belts are highly flexible at least on the sides that face one another.

5. The conveyor system according to claim 4, characterised in that the slide (18) pushes the cable (1) in the direction of transport of the second conveyor (24) between the neighbouring end sections of the continuous belts forming the second conveyor (20, 21).

6. A conveyor system for an automatic cable preparation machine, consisting of a first conveyor (2), which conveyors the cable (1) unwound from a reel in the direction of its longitudinal axis to a cable cutting station (13), and of a second conveyor (24) which runs at rights angles thereto and consists of a continuous belt, said second conveyor (24) receiving and clamping the cable (1) and conveying it onwards perpendicular to the cable axis, and having clamping locators into which the cable is fed, characterised in that parallel to the second conveyor (24) is disposed a constructionally similar third conveyor (26).

7. The conveyor system according to claim 6, characterised in that the two continuous belt conveyors are belt drives (24, 26).

8. The conveyor system according to claim 7, characterised in that at least one belt drive (26) of the third conveyor (26) is adjustable in position in and counter to the direction of transport of the first conveyor (2).

9. The conveyor system according to claim 8, characterised in that the second belt drive of the second conveyor (24), viewed from the first conveyor (2), is adjustable in position.

10. The conveyor system according to claims 1 and 9, characterised in that the slide (18, 29) is divided between the second and third conveyor and each part has an individually controllable drive.

Fig. 1

28    24    16    26    27

B    B

A

A

2    1    13    18    29

y    z

Fig. 2 (Schnitt A -A)

22    20    19    1    24    14    15    16    25    18

21    23    19    17

Fig. 3 (Schnitt B-B)